# EUROPEAN PATENT SPECIFICATION

(11) **EP 2 674 409 B1**
(45) Date of publication and mention of the grant of the patent: **23.10.2019**
(21) Application number: 11858456.4
(22) Date of filing: 08.02.2011
(51) Int. Cl.: C04B 33/04, C04B 38/02, C04B 33/32, C04B 33/13

(54) **CERAMIC COMPOSITION**
KERAMISCHE ZUSAMMENSETZUNG
COMPOSITION EN CÉRAMIQUE

(43) Date of publication of application: 18.12.2013
(73) Proprietor: Ceilook, SL, 12180 Cabanes Castellón (ES)
(72) Inventor: PIQUER MARTÍ, Joaquin, E-12200 Onda - Castellón (ES); VIVONA, Daniel, E-12560 Benicassim - Castellón (ES)
(74) Representative: Sahuquillo Huerta, Jesús
(86) International application number: PCT/ES2011/000022
(87) International publication number: WO 2012/107599

(56) References cited:
- EP-A1- 2 618 037
- WO-A2-2008/123671
- CA-A- 884 355
- GB-A- 1 272 009
- US-A- 4 204 875
- US-A- 4 755 493
- US-A- 5 705 448

## Description

### FIELD OF INVENTION

The field of the present invention is construction, concretely the ceramic industry sector and the chemical industry of frit and ceramic glazes but is also applicable in any other area in which a ceramic composition is required, such as that constituting the object of the present invention.

The object of the present invention refers to a new ceramic composition for coating façades, floors, ceilings and walls.

The present invention also refers to the use of said composition to make parts for placement on floors, walls and on ceilings as well as shaping element to produce low-weight shielding elements.

### BACKGROUND OF THE INVENTION

There are numerous patents and articles worldwide which refer to obtaining this type of ceramic products. However, under no circumstances do they use a composition such as that described in this patent.

As regards the existing patents for preparing light ceramics with high porousness the following procedures are worthy of special mention:
- Obtaining of light ceramics by incorporating organic material whose decomposition when fired allows low densities to be obtained. Within this family of patents, it is worth mentioning patent no. US 5,177,036 of Kunst which incorporates lignite with the clay to, after shaping the part, produce the decomposition of the lignite during the firing process, thereby obtaining a light or low-density ceramic piece. Within this line of work is patent no. KR 20040003201 by CHAE YEONG which incorporates anthracite as the material required for the formation of internal porousness. Finally, within this section, we can highlight the patent LV12402 from the Riga Technical University and patent JP11246279 by Kenmoku Seizo which refer to the introduction of oxidizing material deriving from waste from the polishing process or from incinerator waste as the parent material for the internal porousness required to reduce the apparent density of the fired product.

None of these technologies and knowledge regarding the preparation of low-density ceramic tiles, facilitates shaping during pressing. These pieces shaped by pressing, which are subsequently decorated by applying glazes, present the tendency to the appearance of the defect called *"Black heart"* owing to the excess organic matter and lack of oxygen in the firing atmosphere. The defect called *"Black core"* gives rise to deformations in the parts and defects in the surface finish thereof.
- Obtaining of lightweight ceramic by incorporation low-density raw materials. These raw materials must be of volcanic origin. Within this family of patents, it is worth highlighting in US patent no. US 5,827,457 by Tseng the incorporation of an expandable volcanic mineral like obsidian, perlite or pumice. US patent 5,033,721 by Gnyra describes the incorporation of vermiculite without grinding as a low-density material which allows lightweight parts to be obtained with a view to increasing thermal insulation as well as the resistance to high temperatures and chemical attack. US patent no. 6,664,205 incorporates perlite as an essential constituent part when obtaining low-density ceramic material with a view to serving as a sound insulator in a broad spectrum of frequencies. Patent no. KR 930011276 incorporates Zeolite and agalmatolite as the materials required for obtaining ceramic pieces with low-density and high mechanical and chemical resistance.

However, the present invention does not incorporate this type of raw materials to obtain low-density ceramic tiles, the main reason being to allow the shaping of tiles with the current production processes, in particular, by means of pressing. The aforementioned materials have high internal porousness which endows them with low-density. When said materials are submitted to grinding and then to pressure to shape the ceramic pieces, the internal porousness of said materials is partially closed. This occlusion produces an increase in the density of the shaped material and makes it hard to attain apparent densities of the fired piece as low as that described in the present invention.
- Obtaining of lightweight tiles through the formation of ceramic foams. US patent no. 5,015,606 by Lang describes the obtaining of ceramic products with low-density through the calcination of ceramic foams obtained by mixing clays with surfactants. Within this line of work is patent no. KR 20030044733 by Kim Yun Ju which adds a surfactant to the ceramic slip for subsequent shaping. Finally, it is worth mentioning patent DE 1934855 which uses sodium or ammonium bicarbonate and/or ammonium carbonate as a foaming material. These materials are mixed at a percentage not exceeding 6% with ceramic materials, soluble alkaline silicates and water. By heating at temperatures of under 300°C bubbling is produced owing to the decomposition of sodium or ammonium bicarbonates or of the ammonium carbonate which gives rise to a foam. To lend a certain handleability to the foam, soluble alkaline silicates are used activated by composites such as, inter alia, silicic acid. Thanks to the consistency deriving from the use of alkaline silicates, foams may be moulded (not pressed) and fired at high temperatures. The use of this low-density ceramic preparation process entails a limitation to parts' shaping. The use of foams reduces the density to very low values, but it limits its shaping, particularly by means of pressing and preventing its subsequent handling and decoration with inorganic glazes on the current glazing lines. The fact that pressure is used to shape the pieces would involve the elimination of the internal porousness of the foams, whereby the sought low-density effect would be lost.
- Obtaining of light tiles by reaction at low temperature. Within this family is patent no. KR 19910018075 by Kim Su-Tae in which a calcination of carbonate at a high temperature is initially proposed to remove the carbon dioxide. The product obtained from this calcination is treated with ammonium bicarbonate so that it reacts at a low temperature (equal to or lower than 150 °C). This patent allows pieces to be obtained at low temperatures, though said pieces cannot be decorated with traditional glazes or nanoparticles at the usual working temperatures (exceeding 800 °C). Therefore, although it is a valid alternative for obtaining low-density pieces, it limits the decorating processes thereof.

Document EP2618037 provides a vacuum insulation material having excellent thermal insulation even in a high-temperature environment over a long period of time, and also provides a method for producing the same. A core starting material composition is molded into a predetermined shape, the core starting material composition containing a talc-based clay mineral, a potassium compound selected from potassium carbonate and potassium bicarbonate, and water, and the resultant core starting material composition is fired at a temperature lower than a melting point of the talc-based clay mineral, to produce a core material formed of a porous fired body in which a layered structure of the talc-based clay mineral is cleaved and at least a portion of the cleaved structure is partially bonded. This core material is then vacuum packaged in a gas-barrier packaging, to produce a vacuum insulation material.

Document US4755493 discloses a ceramic composition for dielectric ceramic bodies, having a major component consisting of a compound having a perovskite structure or a complex perovskite structure. The ceramic composition includes at least one inorganic peroxide selected from the group consisting of calcium peroxide, strontium peroxide and barium peroxide.

Finally, document GB1272009 discloses a process for manufacturing a light weight ceramic product which comprises 1) mixing (a) pulverized ceramic raw material, (b) an aqueous solution of a water-soluble high molecular weight organic substance, the amount of the solution being such as to provide a content of the water-soluble high molecular weight organic substance of from 1 to 20% based on the weight of ceramic raw material, and (c) a blowing agent capable of producing gas by decomposition when heated to a temperature of from 50°C to 300°C, to form a mixture having a viscosity of from 5,000 to 50,000 cps; 2) placing the mixture in a mould and heating it in the mould to a temperature at which the blowing agent is activated to foam and harden the mixture into a foamed moulding of the desired shape, and 3) firing the foamed moulding at a temperature of from 800°C to 1600°C.

It can thus be observed that although the documents regarding the prior art offer possibilities, they do not effectively solve the problem of obtaining a ceramic material for manufacturing low-density parts which can be made using the habitual processes to be found on the market, affording the advantage of versatility when used in those processes generally used in the current state of art.

### DETAILED DESCRIPTION OF THE INVENTION

The present invention refers to a ceramic composition according with the claim 1. The present invention allows ceramic pieces with low-density when fired to be obtained. The main advantage of this composition is that it can be prepared and decorated using the customary ceramic tile production systems and it allows the shaping of ceramic pieces by means of pressing.

For that which is the object of the present invention, "elements with valence +1" is taken to mean both those atoms, elements, molecules or chemical groups which have lost an electron and which thus have as a valence the valence number +1 as well as alkaline or alkaline-earth elements or units such as the ammonium group (NH4)⁺.

The present invention will use the terms "ceramic composition", "ceramic paste" or "ceramic material" indistinctly.

These materials alongside the natural or artificial ceramic raw materials and the appropriate additives allow the shaping of the ceramic piece.

The present disclosure sets out to obtain a low-density ceramic piece which can be shaped and decorated using the current manufacturing system, and specifically, shaping by pressing. This allows geometries and formats to be obtained which are unfeasible or constitute a high level of difficulty in the event they are obtained by means of other shaping systems (casting or extrusion).

In fact, if the results of the documents stated above in the invention background section are analysed, the inventors of the present invention observe that the results obtained are not optimum for the purposes pursued by the present invention.

The main purpose of this comparative analysis is to assess whether the shaping of the pieces can be obtained by means of the pressing system.

Initially, compositions were evaluated which incorporated low-density raw materials, generally of volcanic origin. These raw materials were mineral and expanded vermiculite, mineral and expanded perlite and pumice, combined with other raw materials habitual in the traditional ceramic sector (carbonates, clays, kaolin, feldspars, quartzes etc.).

One the pieces have been shaped by pressing and fired at a temperature at which water absorption exceeding 10% is obtained, it was observed that the apparent density of the piece exceeded 1400 kg/m³ and on many occasions exceeding 1500 kg/cm³. If it is borne in mind that the apparent density of the tiles belonging to the BIIIa group is around 1800 Kg/cm³.

However, the reduction in apparent density owing to the introduction of materials endowed with high internal porousness does not justify their use owing to:
- Difficult handling.
- High cost.
- Impossibility of dry grinding owing to the loss of internal porousness of the raw material.

The next step was to incorporate a high percentage of organic raw materials in the compositions. Initially, the raw materials gathered in the aforementioned previous patents or in technical articles were evaluated such as raw materials deriving from lignites, composites deriving from cellulose and other organic compounds with low molecular weight which facilitate the degasification of the composition.

However, in pieces shaped by pressing the appearance of the so-called "black core" it was observed that this consists of a dark border in the central area of the part which gives rise to defects in the dimensional stability of the pieces and in the surface finish of the decoration or functional coating

Hence, high contents of alkaline-earth and alkaline carbonates were incorporated in the composition. However, although percentages exceeding 50% were introduced individually or a combination of calcium, magnesium and/or sodium carbonates, apparent densities when firing were achieved of around 1400 Kg/cm³.

However, the pieces formulated by these high percentages of carbonates had dimensional defects owing to excessive refractoriness in those cases in which high percentages of calcium and/or magnesium carbonates were incorporated or an excessive presence of sodium on the surface in the event of incorporating high contents of sodium carbonate in the composition which could give rise to problems during the firing of the parts.

With a view to solving these limitations to the state of the art, the present invention provides a ceramic paste or ceramic material which consists of the incorporation of inorganic raw materials with a high calcination loss. These raw materials are: percarbonates and/or bicarbonates of elements with a valence +1, in the main alkaline elements (such as sodium and potassium) and/or ammonium elements, and/or peroxides of elements with valence +2, in the main, alkaline-earth elements (such as calcium and magnesium).

The incorporation of these materials allows high calcination losses to be achieved and hence low apparent densities when firing without introducing a large quantity of metallic elements which give rise to defects in dimensional stability and in the decoration of these ceramic pieces.

The raw materials described in the present invention in percentages exceeding 20% of weight vis-à-vis the dry weight of the composition are combined with the natural or synthetic ceramic raw materials such as alkaline or alkaline-earth silicoaluminates, quartzes, organic and inorganic binders, clays, kaolins, alkaline or alkaline-earth carbonates, ceramic frits, glasses, aluminates, zirconium silicates etc.

The advantage of incorporating inorganic raw materials with high calcination losses is the absence of the "black core" effect which causes numerous problems in the production system. A further advantage derives from the actual composition of the raw material.

The reduction in density owing to the calcination of its constituent inorganic raw materials allows shaping by means of pressure. This represents progress compared with other raw materials whose low-density can be put down to the internal structure of the raw material with a large amount of internal porousness. However, this internal porousness of the raw materials is eliminated when using the shaping by pressing system. The pressure exerted on the dust occludes the internal porousness which exists between particles in their interior which is why its use is restricted to certain shaping systems in which pressure is not used as a manufacturing system such as by adhesion or extrusion.

### EXAMPLES OF IMPLEMENTATION

The following specific examples provided here serve to illustrate the nature of the present invention. These examples are included solely the sake of illustration and they should not be interpreted as restrictions to the invention claimed herein.

### Example 1

The different raw materials are initially weighed according to the formula describe above:

| Raw Material | Weight Percentage |
|---|---|
| Kaolin | 25.0 |
| Potassium feldspar | 25.0 |
| Calcium carbonate | 24.5 |
| Sodium percarbonate | 24.5 |
| Organic binder (Polysaccharide)(Neos Binder 82®) | 1.0 |

These raw materials are ground when dry until achieving a grading grade whose rejection at 63µm is equal to or lower than 2%. The resulting powder is moistened in a rotary drum granulator until 14% to obtain granules with enough fluidity which allow the loading of the press. Said granules are subsequently dried by means of a fluid bed until 6% humidity and they are subsequently screened to remove any agglomerated of large dimensions using a screen whose mesh exceeds 1000µm. The granulometric distribution obtained of the granulate is:

| Mesh size (µm) | Weight % |
|---|---|
| >1000 | 0.2 |
| 1000-500 | 23.1 |
| 500-300 | 35.7 |
| 300-200 | 23.0 |
| 200-100 | 14.9 |
| <100 | 3.1 |

The granules are then pressed at a specific pressure of 100 Kg/cm² to achieve an apparent density of the shaped, dry piece of 1600 Kg/m³.

To further increase the reduction in the piece's weight without reducing the maximum thickness thereof, as well as using the composition of the present invention, pressing was carried out with a part (rear of the piece) which presented a strong relief.

In this way, ceramic pieces in 500x500 mm format were obtained with maximum thicknesses of 14mm and minimum thicknesses of 3mm.

Once the shaping has been completed, the piece is dried until attaining a residual humidity of under 0.5%. At this stage a vertical industrial dryer with two burners was used and the maximum temperature of the second burner was 175°C. The time left inside the dryer was 90 minutes between entry and exit. At this stage the organic binder, by means of the hold exerted on the particles, increases the mechanical resistance of the part (MOR) from values of 2.2 Kg/cm² after shaping to values of 38.7 Kg/cm².

These pieces are fired in an industrial furnace whose firing cycle is:

| Temperature interval (°C) | Time left inside (min) |
|---|---|
| 100-500 | 8 |
| 500-900 | 18 |
| 900-1060 | 16 |
| 1060-1060 | 6 |
| 1060-575 | 5 |
| 575-530 | 4 |
| 530-50 | 5 |

At the end the pieces have ceramic decoration on a support whose apparent density when fired is lower than 1250 Kg/m³ and lower than 1190 Kg/m³.

Finally, ceramic pieces in 500x500 format were obtained with maximum thicknesses of 14mm and minimum thicknesses of 3mm and an apparent density of 1190 kg/m³ which presents a high linear expansion factor owing to the amount of percarbonate introduced therein. This expansion factor at temperatures falling between 50 - 300 °C is 107 10-7 1/K. In addition to high water absorption (greater than 10%) and an expansion of the fired piece (1%), endowed with mechanical resistance when fired complying with the ISO standard for tiles BIIIa and minimum thicknesses of lower than 7.5 mm.

The mechanical resistance of the shaped, dried piece is increased by the incorporation of organic and inorganic additives into the composition. These additives create union points between the particles either by means of chemical bonds or by fusion at low temperatures. These bonds increase the mechanical resistance up to values which facilitate the handling of the parts during the nanoparticle decoration or impregnation process. In the present example, polysaccharides binders were used; however, bonds which can be used include sulphonates, celluloses, acrylics, silicates, phosphates or a mixture of the above, though it is feasible to use other kinds of binders (formaldehydes, casein etc.)

The purpose is to use these pieces endowed with low density and weight for installation on floors, walls and on ceilings. Furthermore, the present example is appropriate for the preparation of low-density ceramic pieces endowed with thermally and acoustically insulating properties,

The advantage afforded by the present invention is that as well as being shaped by pressing, endowing it with greater mechanical resistance when raw compared with other kinds of shaping systems (casting or extrusion), it is possible to additive organic and inorganic binders which further increase said mechanical resistance. This enables the piece to be handled more easily, both in decoration procedures as well as in raw machining processes thereof.

A further advantage of the present invention is the possibility of reducing firing cycles compared with other kinds of patents whose low-density is obtained from the combustion of organic products. When ceramic pastes are prepared with high contents of organic matter, the firing cycles must be slow with a view to facilitating the combustion and degasification of organic matter as oxygen diffusion is necessary inside the piece so that the calcination of the organic component is carried out. The present invention, by using bicarbonates or percarbonates, the decomposition of these materials and the degasification thereof, is produced at a greater speed.

By way of conclusion of all that stated above, an essential aspect of the present invention is a ceramic composition which allows ceramic pieces with a low-density when fired to be obtained according with any of claims 1 or 2.

According to any claims 3 or 4, the present invention refers to the use of the ceramic composition according to the invention to manufacture low-density and weight ceramic pieces for their placement on floors, walls and, in particular, on ceilings as well as a shaping element to produce low-weight shielding elements.

## Claims

1. Ceramic composition consisting on:
percarbonates or bicarbonates of alkaline elements with a valence +1 at a percentage exceeding 20% dry weight of the ceramic composition;
additives selected from binders, deflocculants, suspending components or plasticizers; and
natural or synthetic raw materials selected from alkaline or alkaline-earth silicoaluminates, quartzes, clays, kaolin, alkaline or alkaline-earth carbonates, ceramic frits, glasses, aluminates or zirconium silicates.

2. Ceramic composition according with claim 1 wherein the alkaline elements are sodium or potassium.

3. Use of the ceramic composition of the claims 1 to 2 to make parts for placement on floors, walls and on ceilings.

4. Use of the ceramic composition of the claims 1 to 2 as shaping elements to produce low-weight shielding elements.

## Patentansprüche

1. Keramische Zusammensetzung, bestehend aus:
Percarbonaten oder Bicarbonaten aus alkalischen Elementen mit einer Wertigkeit +1 bei einem Prozentsatz von mehr als 20 % Trockengewicht der keramischen Zusammensetzung; Additiven, ausgewählt aus Bindemitteln, Entflockungsmitteln, suspendierenden Komponenten oder Weichmachern; und
natürlichen oder synthetischen Rohstoffen, ausgewählt aus alkalischen oder erdalkalischen Aluminiumsilicaten, Quarzen, Ton, Kaolin, alkalischen oder erdalkalischen Carbonaten, keramischen Fritten, Glas, Aluminaten oder Zirkonsilikaten.

2. Keramische Zusammensetzung nach Anspruch 1, wobei die alkalischen Elemente Natrium oder Kalium sind.

3. Verwendung der keramischen Zusammensetzung nach den Ansprüchen 1 bis 2 zur Herstellung von Bauteilen für die Anordnung auf Böden, Wänden und Decken.

4. Verwendung der keramischen Zusammensetzung nach den Ansprüchen 1 bis 2 als Formelemente zur Herstellung von leichtgewichtigen Abschirmungselementen.

## Revendications

1. Composition céramique constituée par :
des percarbonates ou des bicarbonates d'éléments alcalins avec une valence +1 à un pourcentage supérieur à 20 % en poids sec de la composition céramique ;
des additifs sélectionnés parmi des liants, des défloculants, des composants de mise en suspension ou des plastifiants ;
et des matériaux bruts naturels ou synthétiques sélectionnés parmi des silico-aluminates alcalins ou alcalino-terreux, des quartz, des argiles, du kaolin, des carbonates alcalins ou alcalino-terreux, des frittes de céramique, des verres, des aluminates ou des silicates de zirconium.

2. Composition céramique selon la revendication 1 dans laquelle les éléments alcalins sont le sodium ou le potassium.

3. Utilisation de la composition céramique selon les revendications 1 à 2 pour fabriquer des pièces destinées à être placées sur des sols, des murs et sur des plafonds.

4. Utilisation de la composition céramique selon les revendications 1 à 2 comme éléments de façonnage pour produire des éléments de blindage de faible poids.
